(19) Europäisches Patentamt / European Patent Office / Office européen des brevets

(11) **EP 3 754 374 B1**

(12) **EUROPEAN PATENT SPECIFICATION**

(45) Date of publication and mention
of the grant of the patent:
**13.11.2024 Bulletin 2024/46**

(51) International Patent Classification (IPC):
**G01S 15/96** (2006.01) **G01S 15/86** (2020.01)
**G01S 7/539** (2006.01)

(21) Application number: **19180594.4**

(52) Cooperative Patent Classification (CPC):
**G01S 15/96; G01S 7/539; G01S 15/86**

(22) Date of filing: **17.06.2019**

(54) **FISH WEIGHT MEASURING APPARATUS**

FISCHGEWICHTMESSVORRICHTUNG

APPAREIL DE MESURE DE POIDS DU POISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020 Bulletin 2020/52**

(73) Proprietor: **Furuno Electric Company Limited
Nishinomiya Hyogo 662-8580 (JP)**

(72) Inventors:
• **ITO, Masanori
Nishinomiya 622-8580 (JP)**
• **KAWAI, Masato
Nishinomiya 662-8580 (JP)**
• **YAMAGUCHI, Takeharu
Nishinomiya 662-8580 (JP)**

(74) Representative: **Cleveland Scott York
5 Norwich Street
London EC4A 1DR (GB)**

(56) References cited:
**EP-A1- 3 316 220      WO-A1-2019/017132
US-A1- 2006 018 197     US-B2- 9 541 645**

• **V PUIG ET AL: "Biomass estimation of bluefin
tuna in sea cages by the combined use of
acoustic and optical techniques", VOL. SCI. PAP.
ICCAT, 1 January 2012 (2012-01-01), pages 284 -
290, XP055438276, Retrieved from the Internet
<URL:http://www.iccat.int/Documents/CVSP/CV
068_2012/no_1/CV068010284.pdf>**

EP 3 754 374 B1

**Description**

TECHNICAL FIELD

The present disclosure, in general, relates to weight measurement of a target such as fish in aquaculture, and, more particularly, to an apparatus and a method for measuring weight of the fish in the aquaculture based on signals of a transducer and a camera.

BACKGROUND

Background description includes information that may be useful in understanding the present disclosure. It is not an admission that any of the information provided herein is prior art or relevant to the presently claimed subject matter, or that any publication specifically or implicitly referenced is prior art.

Aquaculture is the breeding, rearing, and harvesting of fish, shellfish, plants, algae, and other organisms in all types of water environments. In aquaculture, there is need to measure fish weight without actually touching the fish. Conventionally, technology based on stereo type camera is used to measure the fish weight. In another conventional echo sounding technology, an ultrasonic detection apparatus is used to measure the fish weight. The ultrasonic detection apparatus has a transmitter and a receiver to send a transmission wave signal and receive a reception signal containing echo data after reflecting from the target object (for example fish).

With the stereo camera technology as explained in Harvey et al, "The accuracy and precision of underwater measurements of length and maximum body depth of southern bluefin tuna (Thunnus maccoyii) with a stereo-video camera system", Fisheries Research, 63(3): 315-326, 2003, the two views of the fish can be obtained from captured images of the fish with two different cameras which enables to measure fish length and fish width when the cameras are looking in a vertical direction. In another configuration, when the cameras are looking in a horizontal direction, fish length and fish height can be obtained. However, as the stereo camera based technology measures fish sizes only in two dimensions, an accurate weight of the fish cannot be measured.

With the echo sounding technology as explained in Godlewska M. (2004), "Target strength of freshwater fishes at 420 kHz measured in cages", Hydroacoustics 7: 55-62"., fish echo enables to measure fish length based on Target Strength (TS), when the transducer is sounding in a vertical direction.

Therefore, the echo sounding technology alone or the stereo camera technology alone cannot provide a measurement of all 3 dimensions, i.e., length, height, width of target, and therefore cannot accurately estimate target weight.

EP 3 316 220 discloses a system for determining the biomass, size and number of tuna in a region of water. A measurement means is used which comprises two cameras acting to obtain a sequence of stereoscopic images with two sub-sequences, and an acoustic sensor made up of an echo sounder and a transducer, generating an echogram. The measurement means are installed submerged in a known position and aimed in an upward direction, such that ventral measurements of the tuna passing through the region of water are taken. The echogram is used for determining the number of tuna, whereas the images are used for determining their size, and accordingly their weight. Given that the relative positions of the cameras are known, the distance at which the tuna is located can be triangulated and compensation can be made for the measurement of size considering said distance.

The document by Puig et al entitled "Biomass estimation of bluefin tuna in sea cages by the combined use of acoustic and optical techniques", Vol. Sci. Pap. ICCAT, 1 January 2012, pages 284-290, discloses an experimental setup to estimate the biomass of caged bluefin tuna. A combined system of acoustic and optical techniques was used in order to obtain direct values of acoustic target strength (TS) and information on the orientation of tuna inside the acoustic beam and their size.

US 2015/0234046 discloses a fish finder which uses an acoustic transducer to detect fish. It is disclosed that fish body height can be calculated based on the length of the fish echo signal. It is disclosed that fish body length can be obtained from the echo signal. It is also disclosed that fish weight can be calculated based on body length.

To solve the above technical problem, i.e., accurately measuring weight of target, the present subject matter provides an apparatus and method for measuring length, width, and height of the target.

According to one aspect of the present invention there is provided a target measuring apparatus as defined in claim 1.

According to another aspect of the present invention there is provided a method for measuring a weight of a target as defined in claim 15.

Preferred features of the invention are recited in the dependent claims.

OBJECTS OF THE DISCLOSURE

It is a general object of the present disclosure to provide an apparatus and a method for measuring weight of a target (for example fish).

It is an object of the present disclosure to provide an apparatus and a method for measuring weight of a target based on length, width, and height.

These and other objects and advantages of the present invention will be apparent to those skilled in the art after a consideration of the following detailed description taken in conjunction with the accompanying drawings in which a preferred form of the present invention is illustrated.

SUMMARY

This summary is provided to introduce concepts related to an apparatus and a method for measuring weight of a target based on length, width, and height. The concepts are further described below in the detailed description.

The present disclosure relates to a target measuring apparatus. The target measuring apparatus includes a transducer configured to transmit a transmission wave into water and configured to generate a reception signal based on a reflection wave of the transmission wave on a target; and a camera configured to take a picture of the target, the camera and the transducer facing a first direction. The target measuring apparatus further includes a target measuring system coupled to the transducer and the camera. The target measuring system includes a first length measuring module configured to measure a first length of the target based on the reception signal, the first length being measured in a direction parallel with the first direction; a target distance measuring module configured to measure a target distance between the camera and the target based on the reception signal; a second and third length measuring module configured to measure a second length and a third length of the target based on the picture and the target distance, the second length being measured in a second direction, the third length being measured in a third direction perpendicular to the second direction, the second and third directions forming a plane perpendicular to the first direction; and a weight measuring module configured to measure a weight of the target based on the first length, the second length, and the third length of the target.

In an aspect, the first length measuring module measures the first length based on a measure of a duration of at least a part of the reception signal that corresponds to the target.

In an aspect, the second and third length measuring module measures the second length based on a measure of a longitudinal size of the target on the picture, and the third length based on a measure of a lateral size of the target on the picture.

In an aspect, the second and third length measuring module measures the second length and the third length based on a focal length of the camera.

In an aspect, the weight measuring module measures the weight of the target based on a model of the target, the model linking the first length, the second length, and the third length of the target with the weight of the target.

In an aspect, the first direction is vertical; the first length corresponds to a target height; the second length corresponds to a target length; and the third length corresponds to a target width.

In an aspect, the target measuring apparatus includes the target measuring system selects the target that is close to centre of the picture.

In an aspect, the target measuring system is further configured to select the target having a straight body on the picture.

In an aspect, the target measuring system selects the target that is swimming substantially perpendicular to optical axis of the camera.

In an aspect, the target is a fish to be raised in an aquaculture environment.

The present disclosure further relates to a method for measuring a weight of a target. The method includes measuring a first length of the target based on a reception signal generated by a transducer based on a reflection wave of a transmission wave transmitted on the target; measuring a target distance between a camera and the target based on the reception signal, the camera is being configured to take a picture of the target, the camera and the transducer facing a first direction parallel to a direction in which the first length is measured; measuring a second length and a third length of the target based on the picture and the target distance, the second length being measured in a second direction, the third length being measured in a third direction perpendicular to the second direction, the second and third directions forming a plane perpendicular to the first direction; and measuring a weight of the target based on the first length, the second length, and the third length of the target.

Various objects, features, aspects, and advantages of the inventive subject matter will become more apparent from the following detailed description of preferred embodiments, along with the accompanying drawing figures in which like numerals represent like components.

The foregoing summary is illustrative only and is not intended to be in any way limiting. In addition to the illustrative aspects, embodiments, and features described above, further aspects, embodiments, and features will become apparent by reference to the drawings and the following detailed description.

BRIEF DESCRIPTION OF THE DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and methods that are consistent with the subject matter as claimed herein, wherein:

Fig. 1 illustrates line of sight of camera and transducer with target, in accordance with an exemplary embodiment of the present disclosure;

Fig. 2 illustrates a block diagram showing configuration of a target measuring apparatus with camera and transducer positioned in first direction, in accordance with an exemplary embodiment of the present disclosure;

Fig. 3 illustrates a block diagram of target measuring system of the target measuring apparatus of the fig. 2, in accordance with an exemplary embodiment of the present disclosure;

Fig. 4A, 4B, and 4C illustrate concept of target echo on reception signal with time to measure target distance and first length of the target, in accordance with an exemplary embodiment of the present disclosure;

Fig. 5 illustrates horizontal position of camera and transducer with respect to the target to measure weight of the target, in accordance with an exemplary embodiment of the present disclosure; and

Fig. 6 illustrates a method for measuring weight of the target, in accordance with an exemplary embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

DETAILED DESCRIPTION

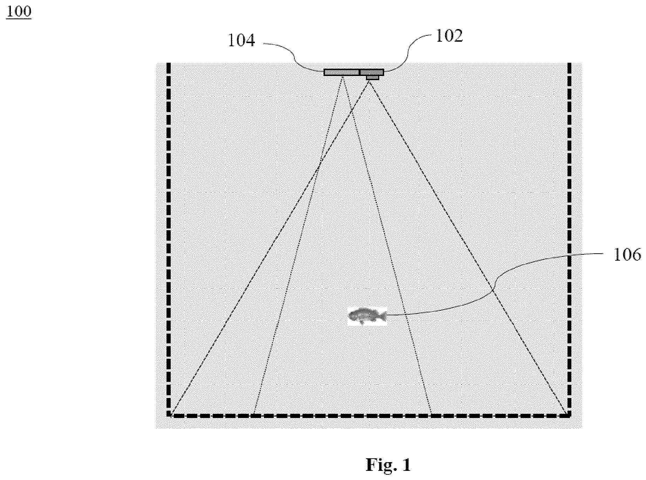

Various embodiments and/or implementations described herein relates to an apparatus and a method for measuring weight of a fish in an aquaculture. In an embodiment represented in Fig. 1, a target measuring apparatus 100 (hereinafter may be referred as apparatus 100) includes a camera 102 and a transducer 104 of a sounder. In an aspect and as show in Fig. 1, the camera 102 and the transducer 104 are placed next to each other. The camera 102 and transducer 104 of the sounder are positioned at the same level in a vertical direction and are facing vertically downward from above the target 106. However, without deviating from the scope of the present disclosure, those skilled in the art can appreciate that the camera 102 and the transducer 104 can be placed so that both are facing vertically upward from below the target 106. In another aspect, the camera 102 and the transducer 104 may be positioned so that both are facing horizontally from the side of the target 106.

The camera 102 is single camera and the sounder is a single beam echo sounder. Further, the camera may be a stereo type camera and the sounder may be dual beam sounder or multi-beam sounder. The sounder includes the transducer 104, a transmitter, and a receiver that work as per their pre-specified profile. On activation of the apparatus 100, the transmitter of the sounder generates a transmission signal at different time interval or ping as per requirement and the transducer 104 converts the transmission signal into a transmission wave that gets transmitted into water. The transmission wave after getting reflected from a target 106, such as fish (hereinafter target and fish are used interchangeably) is received by the transducer 104 to convert the reflected wave into a reception signal. Accordingly, the transducer 104 generates the reception signal based on the reflected wave of the transmission wave on the target 106. Based on the received reception signal, the sounder captures echo data of the target 106.

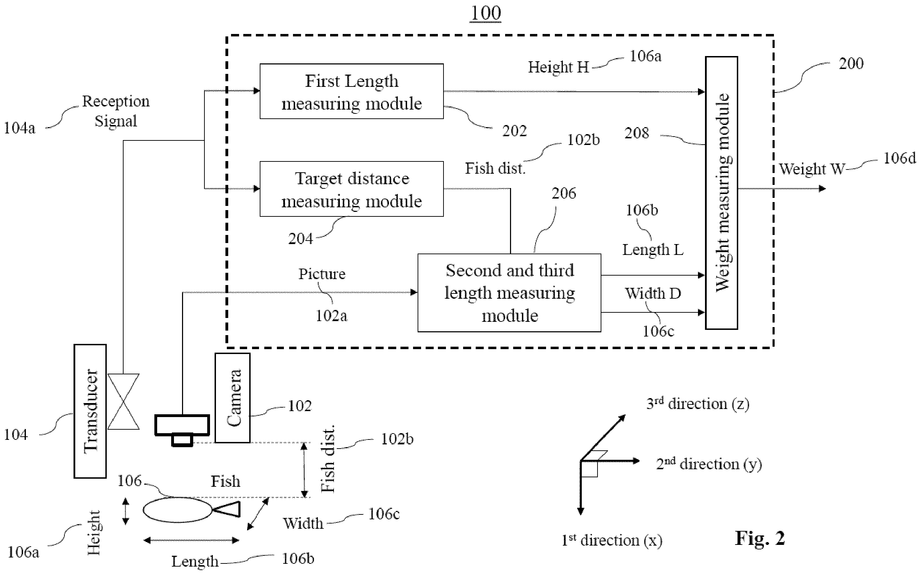

Simultaneous to this capturing of the echo data by the sounder, the camera 102 facing a first direction (x-direction) captures picture data of the target 106. The captured echo data and the picture data of the target 106 can be used to measure weight of the fish 106 in the aquaculture. The process of measurement of the weight of the fish 106 from the echo data and the picture data is described in detail with reference to the description of Figs. 2-6.

Fig. 2 illustrates a block diagram of the target measuring apparatus 100 in accordance with an embodiment of the present disclosure. The target measuring apparatus 100 includes the camera 102, the transducer 104 of the sounder, and a target measuring system 200. The target measuring system 200 includes a first length measuring module 202, a target distance measuring module 204, a second and third length measuring module 206, and a weight measuring module 208.

The transducer 104 transmits a transmission wave into water and generates a reception signal 104a based on a reflected wave of the transmission wave on the target 106. Simultaneously, the camera 102 takes a picture data 102a of the target 106, where the camera 102 and the transducer 104 are positioned facing a first direction (x-direction).

The first length measuring module 202 receives the reception signal (which may also be referred to as echo data) from the transducer 104 to measure a first length (height) 106a of the target 106. The first length 106a is being measured in a direction parallel with the first direction (x-direction).

The target distance measuring module 204 measures a target distance 102b between the camera 102 and the target 106 based on the reception signal received from the transducer 104. As mentioned previously, the camera 102 and the transducer 104 of the sounder are positioned at the same level in a vertical direction and are facing vertically downward from above the target 106.

The second and third length measuring module 206 measures a second length (length) 106b and a third length (width) 106c of the target 106 based on the picture data 102a and the target distance 102b. The second length 106b is being measured in a second direction (y-direction), and the third length 106c is being measured in a third direction (z-direction) perpendicular to the second direction (y-direction), where the second and third directions form a plane perpendicular to the first direction (x-direction).

The first length 106a of the target 106 generated by first length measuring module 202 and the second length 106b and the third length 106c of the target 106 generated by the second and third length measuring module 206 are fed to the weight measuring module 208 to measure a weight 106d of the target 106.

In an aspect, the target measuring apparatus 100 may include a display device (not shown in Fig. 2) to display results of measurement. The camera 102 and the transducer 104 are connected with the target measuring system 200 over wire or wireless network to send the captured picture data 102a and the reception signal 104a, respectively. The camera 102 and the transducer 104 are connected with the target measuring system 200 through an interface (not shown in Fig. 2). Also, although the camera 102 and the transducer 104 are shown in the vicinity of the target measuring system 200; however, without deviating from the scope of the present disclosure, the target measuring system 200 may be positioned at a remote location from the camera 102 and the transducer 104. In another scenario, more than one pair of camera and transducer may be connected to the remotely located target measuring system so that the target measuring system can be utilized for measurement of weight of fishes present in differently located cages in which aquaculture is performed.

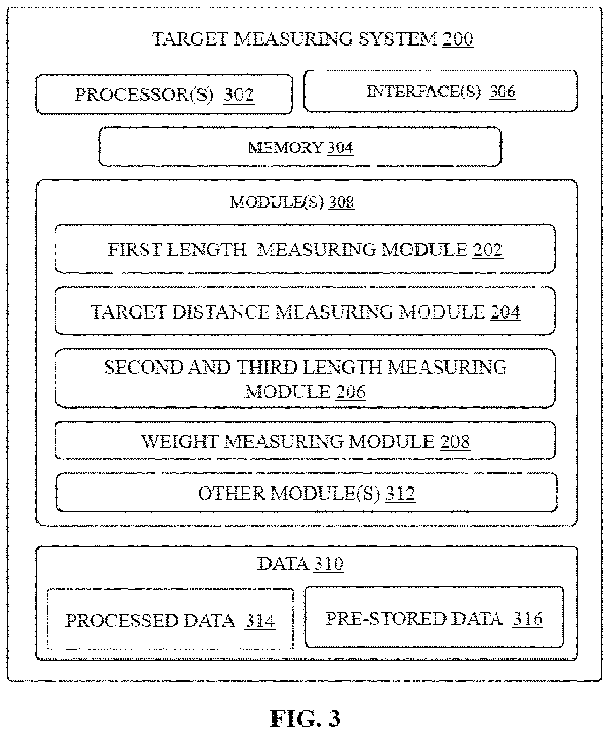

Various components of the target measuring system 200 are represented in Fig. 3. In an example, the system 200 is in communication with the camera 102 and/or with the transducer 104 through a communication network.

The system 200 includes one or more processor(s) 302. The one or more processor(s) 302 may be implemented as one or more microprocessors, microcomputers, microcontrollers, digital signal processors, central processing units, logic circuitries, and/or any devices that manipulate data based on operational instructions. Among other capabilities, the one or more processor(s) 302 are configured to fetch and execute computer-readable instructions stored in a memory 304 of the system 200. The memory 304 may store one or more computer-readable instructions or routines, which may be fetched and executed to measure the weight of the target 106. The memory 304 may include any non-transitory storage device including, for example, volatile memory, such as RAM, or non-volatile memory, such as EPROM, flash memory, and the like.

The system 200 also includes an interface(s) 306. The interface(s) 306 may include a variety of interfaces, for example, interfaces for data input and output devices, referred to as I/O devices, storage devices, and the like. The interface(s) 306 facilitate communication of the system 200 with various devices coupled to the system 200. The interface(s) 306 may also provide a communication pathway for one or more components of the system 200. Examples of such components include, but are not limited to, module(s) 308 and data 310.

The module(s) 308 may be implemented as a combination of hardware and programming (for example, programmable instructions) to implement one or more functionalities of the module(s) 308. In implementations described herein, such combinations of hardware and programming may be implemented in several different ways. For example, the programming for the module(s) 308 may be processor executable instructions stored on a non-transitory machine-readable storage medium and the hardware for the module(s) 308 may include a processing resource (for example, one or more processors), to execute such instructions. In the present implementations, the machine-readable storage medium may store instructions that, when executed by the processing resource, implement module(s) 308. In such examples, the target measuring system 200 may include the machine-readable storage medium storing the instructions and the processing resource to execute the instructions, or the machine-readable storage medium may be separate but accessible to target measuring system 200 and the processing resource. In other examples, the module(s) 308 may be implemented by electronic circuitry.

The data 310 includes data that is either stored or generated as a result of functionalities implemented by any of the module(s) 308. In an aspect, the module(s) 308 include the first length measuring module 202, the target distance measuring module 204, the second and third length measuring module 206, the weight measuring module 208, and other module(s) 312. The other module(s) 312 may implement functionalities that supplement applications or functions performed by the target measuring system 200.

Further, the data 310 may include processed data 314 and pre-stored data 316. The processed data 314 is generated data, for example, target distance, picture data, reception signal as an output result of functionalities implemented by one of the modules 308 and devices. On the other hand, the pre-stored data 316 includes data, such as speed of sound in the water, focal length of camera, model/fish species specific coefficient which is pre-stored in the system to be used by the modules 308 during processing.

In operation, both the camera 102 and the transducer 104 are synchronized with each other to acquire picture data 102a and the reception signal 104a simultaneously. Further, as shown in Fig. 1, the coverage area of the transducer 104 is thinner than the coverage area of the camera 102, thereby the coverage area of the transducer 104 is included within the coverage area of the camera 102. Accordingly, the transducer 104 and the camera 102 are having an overlapping portion as shown in Fig. 1 in accordance with an implementation of the present disclosure.

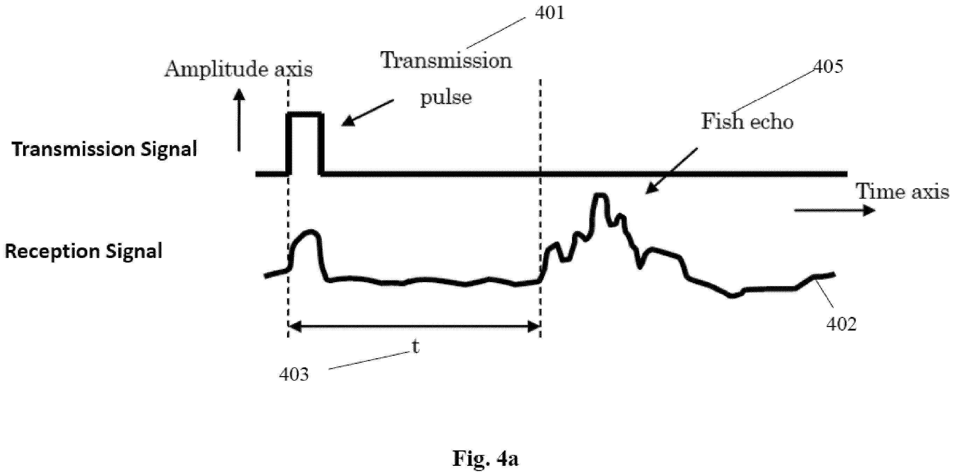

In a scenario in which the camera 102 and the transducer 104 are facing the first direction (x-direction) to acquire picture data 102a and reflection wave that generates reception signal 104a, the target measuring system 200 selects the target 106 which is close to the centre of the picture 102a taken by the camera 102. The target measuring system 200 also selects the target 106 which has substantially a straight body on the picture 102a, the aim being to discard the target 106 that is bending its body on the picture 102a so that the second and third length measuring module 206 can accurately perform measurement of the second length 106b and third length 106c. Upon selection of the target 106, the target distance measuring module 204 measures target distance, i.e., Fish dist. 102b from the transducer 104 to the selected target, i.e., fish with the reception signal 104a. The target distance measuring module 204 measures the target distance 102b in parallel to the first direction (x-direction). The target distance measuring module 204 measures time difference (t) 403 (as shown in Fig. 4a) between the timing at which the transmission wave or transmission pulse 401 is transmitted from the transducer 104 and the timing at which echo, i.e., Fish echo 405 from the target 106, is received by the transducer 104 as shown in Fig. 4a. The target distance measuring module 204 calculates the Fish dist. 102b based on equation 1:

$$\text{Fish\_dist} = c.t/2 \quad\dots\dots\dots\dots\dots\dots\dots\dots\dots\dots\dots\dots\dots\dots\dots\dots\dots\dots\dots\dots\dots(1)$$

Where c is speed of sound in water which is pre-stored in the pre-stored data 316.

As mentioned previously, the camera 102 and the transducer 104 are positioned at the same level in the vertical direction, thereby the target distance measuring module 204 sets the result obtained from equation 1 as the target distance 102b, namely the distance between the camera 102 and the target 106.

In another embodiment, when there is position difference between the camera 102 and the transducer 104 in the x-direction, the position difference is required to be corrected in order to know the distance from the camera 102 to the target 106. For example, if the transducer 104 is positioned below the camera 102, position difference between the camera 102 and the transducer 104 is added in the calculated Fish dist. 102b.

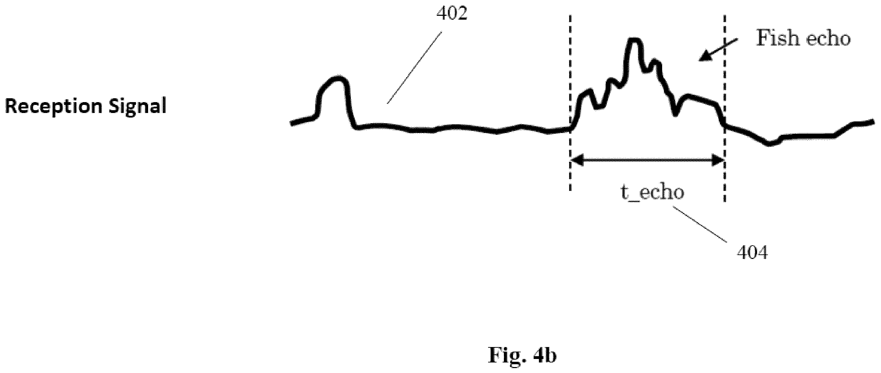

Referring to Fig. 2 and Fig. 4b together, the first length measuring module 202 measures the first length 106a (which may also be referred to as target/fish height 'H') by measuring duration (t echo) 404 of the fish echo 405 using equation 2:

$$H = c.t\_echo/2 \quad\dots\dots\dots\dots\dots\dots\dots\dots\dots\dots\dots\dots\dots\dots\dots\dots\dots\dots\dots\dots..(2)$$

The measured target height 'H' 106a may be stored in the processed data 314 for further processing.

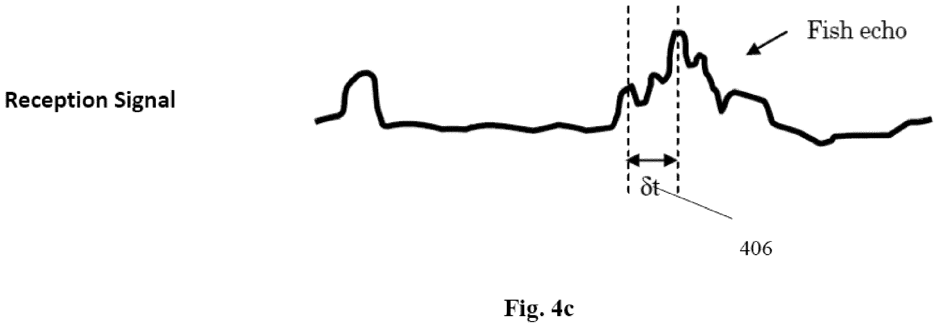

In another embodiment, the target/fish height H 106a can be measured using at least a part of the reception signal (δt) 406 between two positions within the fish echo 405 instead of using the whole duration of the fish echo 405. For example, referring to Fig. 4c, the at least a part of the reception signal (δt) 406 between the first peak occurring in the fish echo 405 and the highest peak occurring in the fish echo 405 can be used, where the first peak indicates the position of the back of the fish 106 whereas the highest peak indicates the position of the swimbladder of the fish 106. Knowing the fish species, the at least a part of the reception signal δt can be converted into fish height (H) using the equation 3:

$$H = fs.c.\delta t/2 \dots\dots\dots\dots\dots\dots\dots\dots\dots\dots\dots\dots\dots\dots\dots\dots\dots\dots\dots\dots\dots\dots\dots\dots\dots(3)$$

where coefficient fs is specific to the fish species. The coefficient 'fs' of a plurality of fishes is pre-stored in the pre-stored data 316 for processing.

The second and third length measuring module 206 then detects head and tail of the target 106 on the picture 102a taken by the camera 102 and measures the second length (which may also be referred to as real length 'L') 106b of the target 106 in the second direction (y-direction). The second length of the target 106 is a longitudinal size of the target 106. The real length of the target (fish length) 106b can be measured knowing the focal length (f) of the camera 102 that is pre-stored in the pre-stored data 316, the distance between the head and the tail of the fish on the picture 102a (Lpicture), and the distance between the camera 102 and the fish (i.e., Fish dist. 102b) calculated by the target distance measuring module 204 and stored in the processing data 314. Further, the real length 'L' 106b of the target is determined by equation 4.

$$L = \frac{Fish\_dist}{f} \times L_{picture} \cdots\cdots\cdots\cdots\cdots\cdots\cdots\cdots\cdots\cdots\cdots\cdots\cdots\cdots\cdots\cdots\cdots (4)$$

The second and third length measuring module 206 detects both sides (i.e., flanks) of the target 106 in the third direction (z-direction) on the picture 102a taken by the camera 102 and measures the third length (which may also be referred to as real width 'D') 106c of the target 106 in the third direction (z-direction). The third length of the target 106 is a lateral size of the target 106. The real width of the target 106c can be measured knowing the focal length (f) of the camera 102 that is pre-stored in the pre-stored data 316, the distance between both sides (i.e., flanks) of the fish in the third direction (z-direction) on the picture 102a (Dpicture), and the distance between the camera 102 and the fish (i.e., Fish dist. 102b) calculated by the target distance measuring module 204 and stored in the processing data 314. Further, the real width 'D' 106c of the target is determined by equation 5.

$$D = \frac{Fish\_dist}{f} \times D_{picture} \cdots\cdots\cdots\cdots\cdots\cdots\cdots\cdots\cdots\cdots\cdots\cdots\cdots\cdots\cdots (5)$$

The first length of the target, i.e., height H of target is being measured in the first direction (x-direction), the second length of the target, i.e., length L of the target is being measured in the second direction (y-direction), and the third length of the target, i.e., width D of the target is being measured in the third direction (z-direction), where the third direction (z-direction) is perpendicular to the second direction (y-direction) and second and the third directions are forming a plane perpendicular to the first direction (x-direction).

The weight measuring module 208 is coupled with the first length measuring module 202 and the second and third length measuring module 206 to receive the target length L 106b, the target width D 106c, and the target height H 106a. The weight measuring module 208 then measures the fish weight W using equation 6:

$$W = aL^b H^c D^d \cdots\cdots\cdots\cdots\cdots\cdots\cdots\cdots\cdots\cdots\cdots\cdots\cdots\cdots\cdots\cdots\cdots\cdots (6)$$

where a, b, c , d are coefficients adapted beforehand and pre-stored in the pre-stored data 316 of the target weight measuring system 200 with respect to each fish species. Further, the pre-stored data 316 of the system 200 has a plurality of models corresponding to a plurality of fish species which are pre-stored along with corresponding coefficient values.

In a case when the camera 102 and the transducer 104 are facing vertically down, there is the possibility that the target 106 is not swimming horizontally (i.e., going up or down) and therefore not swimming perpendicularly to the optical axis of the camera 102. In this case, the target length L 106b appears shorter than the real length of the target 106. In order to reject the target 106 that is in this case, the target distance is measured on 2 or more pings and the target 106 is discarded if the distance change between 2 pings is beyond a predefined threshold.

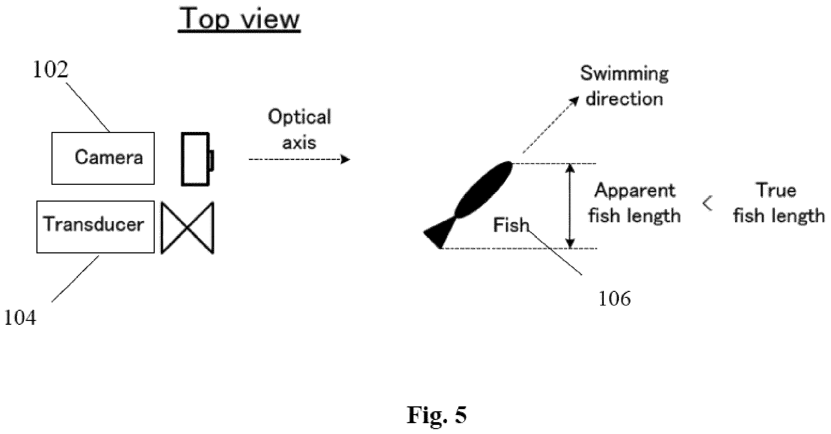

In another embodiment as shown in Fig. 5, the camera 102 and the transducer 104 are placed so that they are facing horizontally from the side of the target 106. In the present case, there is the possibility that the fish is not swimming in a direction perpendicular to the optical axis of the camera 102, as shown in the Fig. 5. In this case, the fish length measured by the camera 102 would appear shorter.

To calculate the accurate target length, the target 106 is detected on two or more pings by the sounder and the target distance 102b is measured on each ping. If the distance change between two pings is close to 0, it means that target is swimming roughly perpendicularly to the optical axis of the camera 102 and accurate target length can be anticipated. On the other hand, if the distance change between two pings is beyond a predefined threshold, the target length cannot be measured accurately and therefore, the target is discarded.

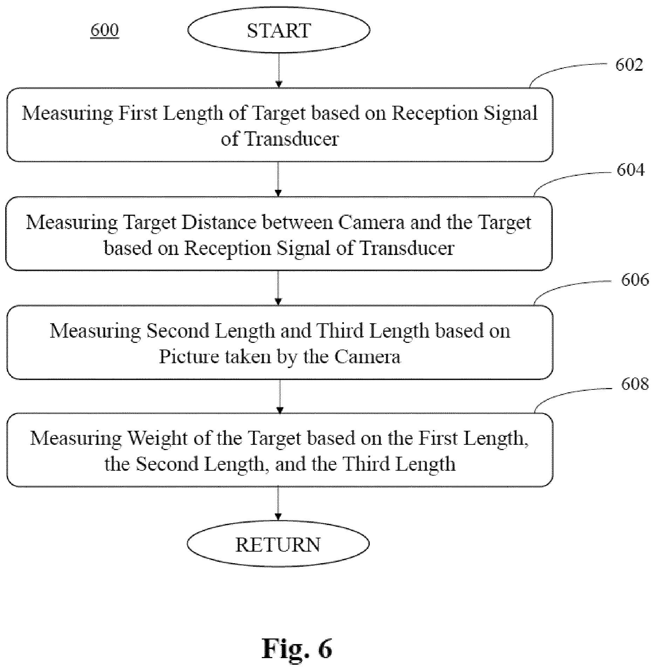

FIG. 6 illustrates a method 600 for measuring weight of target in aquaculture environment according to an implementation of the present disclosure. The order in which the method 600 is described is not intended to be construed as a limitation, and any number of the described method blocks can be combined in any appropriate order to carry out the method 600 or an alternative method. Additionally, individual blocks may be deleted from the method 600 without departing from the scope of the subject matter described herein. The present method 600 illustrates particular process for weight measuring of a target, i.e., fish in the aquaculture environment.

In the present embodiment, both the camera 102 and the transducer 104 are facing first direction in which first length is measured.

At block 602, the method 600 includes measuring of first length, i.e., height 'H' 106a of the target. The first length measuring module 202 measures the first length of the target 106 based on a reception signal generated by the transducer 104 from a reflection wave of a transmission wave on the target 106. The first length measuring module 202 uses the reception signal to measure the first length using either equation 2 or equation 3.

At block 604, the method 600 includes measuring of target distance 102b between the camera 102 and the target 106. The target distance measuring module 204 measures the target distance between the camera 102 and the target 106 based on the reception signal 104a and the equation 1.

At block 606, the method 600 includes measuring second and third length of the target. The second and third length measuring module 206 measures second length, i.e., target length 'L' 106b in the second direction (y-direction) by detecting head and tail of the target 106 on the picture 102a taken by the camera 102. The second and third length measuring module 206 measures third length, i.e., target width 'D' 106c in the third direction (z-direction) by detecting both sides of the target 106 on the picture 102a taken by the camera 102.

At block 608, the method 600 includes measuring weight of the target. The weight measuring module 208 is coupled with the first length measuring module 202 and the second and third length measuring module 206 to receive the target length L, the target width D, and the target height H. The weight measuring module 208 measures the fish weight using equation 6.

## Claims

1. A target measuring apparatus (100), comprising:

   a transducer (104) configured to transmit a transmission wave (401) into water and configured to generate a reception signal (104a) based on a reflection wave of the transmission wave (401) on a target (106);
   a camera (102) configured to take a picture (102a) of the target (106), the camera (102) and the transducer (104) both facing a first direction (x-direction); and
   a target measuring system (200) coupled to the transducer (104) and the camera (102), wherein the target measuring system (200) comprises a weight measuring module (208) configured to measure a weight of the target (106),

   **characterised in that**:

   the target measuring system (200) comprises a first length measuring module (202) configured to measure a first length (106a) of the target (106) based on the reception signal (104a), the first length (106a) being measured in a direction parallel with the first direction (x-direction);
   the target measuring system (200) comprises a target distance measuring module (204) configured to measure the target distance (102b) between the camera (102) and the target (106) based on the reception signal (104a);
   the target measuring system (200) further comprises a second and third length measuring module (206) configured to measure a second length (106b) and a third length (106c) of the target (106) based on the picture (102a) and the target distance (102b) measured by the target distance measuring module (204), the second length (106b) being measured in a second direction (y-direction), the third length (106c) being measured in a third direction (z-direction) perpendicular to the second direction (y-direction), the second and third directions forming a plane perpendicular to the first direction (x-direction); and
   the weight measuring module (208) is configured to measure the weight of the target (106) based on the first length (106a) of the target (106) measured by the first length measuring module (202), and the second and third lengths (106b, 106c) of the target (106) measured by the second and third length measuring module (206).

2. The target measuring apparatus (100) of claim 1, wherein the first length measuring module (202) measures the first length (106a) based on a measure of a duration of at least a part of the reception signal (104a) that corresponds to the target (106).

3. The target measuring apparatus (100) of claim 1 or claim 2, wherein the second and third length measuring module (206) measures: the second length (106b) based on a measure of a longitudinal size of the target (106) on the picture (102a), and the third length (106c) based on a measure of a lateral size of the target (106) on the picture (102a).

4. The target measuring apparatus (100) of claim 3, wherein the second and third length measuring module (206) measures the second length (106b) and the third length (106c) based on a focal length (f) of the camera (102).

5. The target measuring apparatus (100) of any of the preceding claims, wherein the weight measuring module (208) measures the weight of the target (106) based on a model of the target (106), the model linking the first length (106a), the second length (106b), and the third length (106c) of the target (106) with the weight of the target.

6. The target measuring apparatus (100) of any of the preceding claims, wherein

   the first direction (x-direction) is vertical;
   the first length (106a) corresponds to a target height;
   the second length (106b) corresponds to a target length; and
   the third length (106c) corresponds to a target width.

7. The target measuring apparatus (100) of any of the preceding claims, wherein the target measuring system (200) is further configured to select a target (106) in an overlapping portion of the coverage area of the transducer (104) and the coverage area of the camera (102).

8. The target measuring apparatus (100) of any of the preceding claims, wherein the target measuring system (200) is further configured to select a target (106) having a straight body on the picture (102a).

9. The target measuring apparatus (100) of any of the preceding claims, wherein the target measuring system (200) is further configured to select a target (106) that is swimming substantially perpendicular to an optical axis of the camera (102).

10. The target measuring apparatus (100) of any of the preceding claims, wherein the target (106) is a fish to be raised in an aquaculture environment.

11. The target measuring apparatus (100) of any of the preceding claims, wherein the camera (102) is a single camera.

12. The target measuring apparatus (100) of any of the preceding claims, wherein the transducer (104) is the transducer of an echo sounder.

13. The target measuring apparatus (100) of any of the preceding claims, wherein the target distance measuring module (204) is configured to measure the target distance (102b) on two or more pings and to discard the target (106) if the distance change between two pings is beyond a predefined threshold.

14. The target measuring apparatus (100) of any of the preceding claims, wherein the target is a fish and the weight measuring module (208) is arranged to measure the weight of the target (106) using the equation $W = aL^bH^cD^d$, where W is the fish weight, L is target length, D is target width, H is target height, and a, b, c and d are coefficients adapted beforehand and pre-stored in the target measuring system (200) with respect to each of a plurality of fish species.

15. A method (600) of measuring a weight of a target (106), wherein the method is carried out by a target measuring system (200) comprising one or more processors (302) and a camera (102) together with a transducer (104) both facing a first direction (x-direction), the method comprising:

   measuring (604) a target distance (102b) between the camera (102) and the target (106), the camera (102) being configured to take a picture (102a) of the target (106); and
   measuring (608) a weight of the target (106),
   **characterised in that**:

   the method further comprises measuring (602) a first length (106a) of the target (106) based on a reception signal (104a) generated by the transducer (104) based on a reflection wave of a transmission wave transmitted on the target (106), the first length (106a) being measured in a direction parallel with the first direction (x-direction);

the target distance (102b) between the camera (102) and the target (106) is measured based on the reception signal (104a) generated by the transducer (104);

the method further comprises measuring (606) a second length (106b) and a third length (106c) of the target (106) based on the picture (102a) and the measured target distance (102b), the second length (106b) being measured in a second direction (y-direction), the third length (106c) being measured in a third direction (z-direction) perpendicular to the second direction (y-direction), the second and third directions forming a plane perpendicular to the first direction (x-direction); and

the weight of the target (106) is measured based on the measured first length (106a), the measured second length (106b), and the measured third length (106c) of the target (106).

**Patentansprüche**

1. Zielmessvorrichtung (100), umfassend:

einen Wandler (104), der dazu konfiguriert ist, eine Sendewelle (401) in Wasser zu senden, und dazu konfiguriert ist, ein Empfangssignal (104a) basierend auf einer Reflexionswelle der Sendewelle (401) auf ein Ziel (106) zu erzeugen;

eine Kamera (102), die dazu konfiguriert ist, ein Bild (102a) des Ziels (106) aufzunehmen, wobei die Kamera (102) und der Wandler (104) beide in eine erste Richtung (x-Richtung) weisen; und

ein Zielmesssystem (200), das an den Wandler (104) und die Kamera (102) gekoppelt ist, wobei das Zielmesssystem (200) ein Gewichtsmessmodul (208) umfasst, das dazu konfiguriert ist, ein Gewicht des Ziels (106) zu messen,

**dadurch gekennzeichnet, dass**:

das Zielmesssystem (200) ein erstes Längenmessmodul (202) umfasst, das dazu konfiguriert ist, eine erste Länge (106a) des Ziels (106) basierend auf dem Empfangssignal (104a) zu messen, wobei die erste Länge (106a) in einer zu der ersten Richtung (x-Richtung) parallelen Richtung gemessen wird;

das Zielmesssystem (200) ein Zielabstandsmessmodul (204) umfasst, das dazu konfiguriert ist, den Zielabstand (102b) zwischen der Kamera (102) und dem Ziel (106) basierend auf dem Empfangssignal (104a) zu messen;

das Zielmesssystem (200) ferner ein zweites und drittes Längenmessmodul (206) umfasst, das dazu konfiguriert ist, eine zweite Länge (106b) und eine dritte Länge (106c) des Ziels (106) basierend auf dem Bild (102a) und dem von dem Zielabstandsmessmodul (204) gemessenen Zielabstand (102b) zu messen, wobei die zweite Länge (106b) in einer zweiten Richtung (y-Richtung) gemessen wird, die dritte Länge (106c) in einer zu der zweiten Richtung (y-Richtung) senkrechten dritten Richtung (z-Richtung) gemessen wird und die zweite und die dritte Richtung eine zu der ersten Richtung (x-Richtung) senkrechte Ebene bilden; und

das Gewichtsmessmodul (208) dazu konfiguriert ist, das Gewicht des Ziels (106) basierend auf der von dem ersten Längenmessmodul (202) gemessenen ersten Länge (106a) des Ziels (106) und der von dem zweiten und dritten Längenmessmodul (206) gemessenen zweiten und dritten Länge (106b, 106c) des Ziels (106) zu messen.

2. Zielmessvorrichtung (100) nach Anspruch 1, wobei das erste Längenmessmodul (202) die erste Länge (106a) basierend auf einem Maß einer Dauer mindestens eines Teils des Empfangssignals (104a), die dem Ziel (106) entspricht, misst.

3. Zielmessvorrichtung (100) nach Anspruch 1 oder Anspruch 2, wobei das zweite und dritte Längenmessmodul (206) Folgendes misst: die zweite Länge (106b) basierend auf einem Maß einer Längsgröße des Ziels (106) auf dem Bild (102a) und die dritte Länge (106c) basierend auf einem Maß einer Quergröße des Ziels (106) auf dem Bild (102a).

4. Zielmessvorrichtung (100) nach Anspruch 3, wobei das zweite und dritte Längenmessmodul (206) die zweite Länge (106b) und die dritte Länge (106c) basierend auf einer Brennweite (f) der Kamera (102) misst.

5. Zielmessvorrichtung (100) nach einem der vorangehenden Ansprüche, wobei das Gewichtsmessmodul (208) das Gewicht des Ziels (106) basierend auf einem Modell des Ziels (106) misst, wobei das Modell die erste Länge (106a), die zweite Länge (106b) und die dritte Länge (106c) des Ziels (106) mit dem Gewicht des Ziels verknüpft.

6. Zielmessvorrichtung (100) nach einem der vorangehenden Ansprüche, wobei

   die erste Richtung (x-Richtung) vertikal ist;
   die erste Länge (106a) einer Zielhöhe entspricht;
   die zweite Länge (106b) einer Ziellänge entspricht; und
   die dritte Länge (106c) einer Zielbreite entspricht.

7. Zielmessvorrichtung (100) nach einem der vorangehenden Ansprüche, wobei das Zielmesssystem (200) ferner dazu konfiguriert ist, ein Ziel (106) in einem überlappenden Abschnitt des Deckungsbereichs des Wandlers (104) und des Deckungsbereichs der Kamera (102) auszuwählen.

8. Zielmessvorrichtung (100) nach einem der vorangehenden Ansprüche, wobei das Zielmesssystem (200) ferner dazu konfiguriert ist, ein Ziel (106) auszuwählen, das auf dem Bild (102a) einen geraden Körper aufweist.

9. Zielmessvorrichtung (100) nach einem der vorangehenden Ansprüche, wobei das Zielmesssystem (200) ferner dazu konfiguriert ist, ein Ziel (106) auszuwählen, das im Wesentlichen senkrecht zu einer optischen Achse der Kamera (102) schwimmt.

10. Zielmessvorrichtung (100) nach einem der vorangehenden Ansprüche, wobei das Ziel (106) ein Fisch ist, der in einer Aquakulturumgebung großgezogen werden soll.

11. Zielmessvorrichtung (100) nach einem der vorangehenden Ansprüche, wobei die Kamera (102) eine einzelne Kamera ist.

12. Zielmessvorrichtung (100) nach einem der vorangehenden Ansprüche, wobei der Wandler (104) der Wandler eines Echolots ist.

13. Zielmessvorrichtung (100) nach einem der vorangehenden Ansprüche, wobei das Zielabstandsmessmodul (204) dazu konfiguriert ist, den Zielabstand (102b) bei zwei oder mehr Pings zu messen und das Ziel (106) zu verwerfen, wenn die Abstandsänderung zwischen zwei Pings über eine vorab definierte Schwelle hinausgeht.

14. Zielmessvorrichtung (100) nach einem der vorangehenden Ansprüche, wobei das Ziel ein Fisch ist und das Gewichtsmessmodul (208) dazu angeordnet ist, das Gewicht des Ziels (106) unter Verwendung der Gleichung $W = aL^bH^cD^d$ zu messen, wobei W das Fischgewicht ist, L die Ziellänge ist, D die Zielbreite ist, H die Zielhöhe ist und a, b, c und d Koeffizienten sind, die in Bezug auf jede einer Vielzahl von Fischarten vorab angepasst und in dem Zielmesssystem (200) gespeichert sind.

15. Verfahren (600) zum Messen eines Gewichts eines Ziels (106), wobei das Verfahren von einem Zielmesssystem (200) ausgeführt wird, das einen oder mehrere Prozessoren (302) und eine Kamera (102) zusammen mit einem Wandler (104), die beide in eine erste Richtung (x-Richtung) weisen, umfasst, wobei das Verfahren Folgendes umfasst:

   Messen (604) eines Zielabstands (102b) zwischen der Kamera (102) und dem Ziel (106), wobei die Kamera (102) dazu konfiguriert ist, ein Bild (102a) des Ziels (106) aufzunehmen; und
   Messen (608) eines Gewichts des Ziels (106),
   **dadurch gekennzeichnet, dass**:

   das Verfahren ferner das Messen (602) einer ersten Länge (106a) des Ziels (106) basierend auf einem Empfangssignal (104a), das von dem Wandler (104) basierend auf einer Reflexionswelle einer auf das Ziel (106) gesendeten Sendewelle erzeugt wird, umfasst, wobei die erste Länge (106a) in einer zu der ersten Richtung (x-Richtung) parallelen Richtung gemessen wird;
   der Zielabstand (102b) zwischen der Kamera (102) und dem Ziel (106) basierend auf dem von dem Wandler (104) erzeugten Empfangssignal (104a) gemessen wird;
   das Verfahren ferner das Messen (606) einer zweiten Länge (106b) und einer dritten Länge (106c) des Ziels (106) basierend auf dem Bild (102a) und dem gemessenen Zielabstand (102b) umfasst, wobei die zweite Länge (106b) in einer zweiten Richtung (y-Richtung) gemessen wird, die dritte Länge (106c) in einer zu der zweiten Richtung (y-Richtung) senkrechten dritten Richtung (z-Richtung) gemessen wird und die zweite und die dritte Richtung eine zu der ersten Richtung (x-Richtung) senkrechte Ebene bilden; und

das Gewicht des Ziels (106) basierend auf der gemessenen ersten Länge (106a), der gemessenen zweiten Länge (106b) und der gemessenen dritten Länge (106c) des Ziels (106) gemessen wird.

## Revendications

1. Appareil de mesure de cible (100), comprenant :

un transducteur (104) configuré pour émettre une onde d'émission (401) dans l'eau et configuré pour générer un signal de réception (104a) sur la base d'une onde de réflexion de l'onde d'émission (401) sur une cible (106) ;
un appareil photo (102) configuré pour prendre une photo (102a) de la cible (106), l'appareil photo (102) et le transducteur (104) étant l'un et l'autre orientés dans une première direction (direction x) ; et
un système de mesure de cible (200) couplé au transducteur (104) et à l'appareil photo (102), le système de mesure de cible (200) comprenant un module de mesure de poids (208) configuré pour mesurer un poids de la cible (106),
l'appareil de mesure de cible étant **caractérisé en ce que** :

le système de mesure de cible (200) comprend un premier module de mesure de longueur (202) configuré pour mesurer une première longueur (106a) de la cible (106) sur la base du signal de réception (104a), la première longueur (106a) étant mesurée dans une direction parallèle à la première direction (direction x) ;
le système de mesure de cible (200) comprend un module de mesure de distance de cible (204) configuré pour mesurer la distance de cible (102b) entre l'appareil photo (102) et la cible (106) sur la base du signal de réception (104a) ;
le système de mesure de cible (200) comprend en outre un deuxième et troisième module de mesure de longueur (206) configuré pour mesurer une deuxième longueur (106b) et une troisième longueur (106c) de la cible (106) sur la base de la photo (102a) et de la distance de cible (102b) mesurée par le module de mesure de distance de cible (204), la deuxième longueur (106b) étant mesurée dans une deuxième direction (direction y), la troisième longueur (106c) étant mesurée dans une troisième direction (direction z) perpendiculaire à la deuxième direction (direction y), les deuxième et troisième directions formant un plan perpendiculaire à la première direction (direction x) ; et
le module de mesure de poids (208) est configuré pour mesurer le poids de la cible (106) sur la base de la première longueur (106a) de la cible (106), mesurée par le premier module de mesure de longueur (202), et des deuxième et troisième longueurs (106b, 106c) de la cible (106), mesurées par le deuxième et troisième module de mesure de longueur (206).

2. Appareil de mesure de cible (100) selon la revendication 1, dans lequel le premier module de mesure de longueur (202) mesure la première longueur (106a) sur la base d'une mesure d'une durée d'au moins une partie du signal de réception (104a) qui correspond à la cible (106).

3. Appareil de mesure de cible (100) selon la revendication 1 ou 2, dans lequel le deuxième et troisième module de mesure de longueur (206) mesure : la deuxième longueur (106b) sur la base d'une mesure d'une taille longitudinale de la cible (106) sur la photo (102a) et la troisième longueur (106c) sur la base d'une mesure d'une taille latérale de la cible (106) sur la photo (102a).

4. Appareil de mesure de cible (100) selon la revendication 3, dans lequel le deuxième et troisième module de mesure de longueur (206) mesure la deuxième longueur (106b) et la troisième longueur (106c) sur la base d'une longueur focale (f) de l'appareil photo (102).

5. Appareil de mesure de cible (100) selon l'une quelconque des revendications précédentes, dans lequel le module de mesure de poids (208) mesure le poids de la cible (106) sur la base d'un modèle de la cible (106), le modèle reliant la première longueur (106a), la deuxième longueur (106b) et la troisième longueur (106c) de la cible (106) au poids de la cible.

6. Appareil de mesure de cible (100) selon l'une quelconque des revendications précédentes, dans lequel :

la première direction (direction x) est verticale ;
la première longueur (106a) correspond à une hauteur de cible ;
la deuxième longueur (106b) correspond à une longueur de cible ; et

la troisième longueur (106c) correspond à une largeur de cible.

7. Appareil de mesure de cible (100) selon l'une quelconque des revendications précédentes, dans lequel le système de mesure de cible (200) est en outre configuré pour sélectionner une cible (106) dans une partie où se chevauchent la zone de couverture du transducteur (104) et la zone de couverture de l'appareil photo (102).

8. Appareil de mesure de cible (100) selon l'une quelconque des revendications précédentes, dans lequel le système de mesure de cible (200) est en outre configuré pour sélectionner une cible (106) ayant un corps droit sur la photo (102a).

9. Appareil de mesure de cible (100) selon l'une quelconque des revendications précédentes, dans lequel le système de mesure de cible (200) est en outre configuré pour sélectionner une cible (106) qui nage sensiblement perpendiculairement à un axe optique de l'appareil photo (102).

10. Appareil de mesure de cible (100) selon l'une quelconque des revendications précédentes, dans lequel la cible (106) est un poisson destiné à être élevé dans un environnement aquacole.

11. Appareil de mesure de cible (100) selon l'une quelconque des revendications précédentes, dans lequel l'appareil photo (102) est un appareil photo unique.

12. Appareil de mesure de cible (100) selon l'une quelconque des revendications précédentes, dans lequel le transducteur (104) est le transducteur d'un échosondeur.

13. Appareil de mesure de cible (100) selon l'une quelconque des revendications précédentes, dans lequel le module de mesure de distance de cible (204) est configuré pour mesurer la distance de cible (102b) sur deux pings ou plus et pour rejeter la cible (106) si la variation de distance entre deux pings est supérieure à un seuil prédéfini.

14. Appareil de mesure de cible (100) selon l'une quelconque des revendications précédentes, dans lequel la cible est un poisson et le module de mesure de poids (208) est conçu pour mesurer le poids de la cible (106) au moyen de l'équation $W = aL^bH^cD^d$, où W est le poids du poisson, $L$ est la longueur de la cible, $D$ est la largeur de la cible, $H$ est la hauteur de la cible et $a, b, c$ et $d$ sont des coefficients adaptés au préalable et préstockés dans le système de mesure de cible (200) en fonction de chaque espèce de poissons d'une pluralité d'espèces de poissons.

15. Procédé (600) de mesure d'un poids d'une cible (106), le procédé étant mis en oeuvre par un système de mesure de cible (200) comprenant un ou plusieurs processeurs (302) et un appareil photo (102) ainsi qu'un transducteur (104) orientés l'un et l'autre dans une première direction (direction x), le procédé comprenant les étapes consistant à :

mesurer (604) une distance de cible (102b) entre l'appareil photo (102) et la cible (106), l'appareil photo (102) étant configuré pour prendre une photo (102a) de la cible (106) ; et
mesurer (608) un poids de la cible (106),
le procédé étant **caractérisé en ce que** :

le procédé comprend en outre l'étape consistant à mesurer (602) une première longueur (106a) de la cible (106) sur la base d'un signal de réception (104a) généré par le transducteur (104) sur la base d'une onde de réflexion d'une onde d'émission émise sur la cible (106), la première longueur (106a) étant mesurée dans une direction parallèle à la première direction (direction x) ;
la distance de cible (102b) entre l'appareil photo (102) et la cible (106) est mesurée sur la base du signal de réception (104a) généré par le transducteur (104) ;
le procédé comprend en outre l'étape consistant à mesurer (606) une deuxième longueur (106b) et une troisième longueur (106c) de la cible (106) sur la base de la photo (102a) et de la distance de cible (102b) mesurée, la deuxième longueur (106b) étant mesurée dans une deuxième direction (direction y), la troisième longueur (106c) étant mesurée dans une troisième direction (direction z) perpendiculaire à la deuxième direction (direction y), les deuxième et troisième directions formant un plan perpendiculaire à la première direction (direction x) ; et
le poids de la cible (106) est mesuré sur la base de la première longueur (106a) mesurée, de la deuxième longueur (106b) mesurée et de la troisième longueur (106c) mesurée de la cible (106).

100

104        102

106

**Fig. 1**

EP 3 754 374 B1

Fig. 2

15

TARGET MEASURING SYSTEM 200

PROCESSOR(S) 302

INTERFACE(S) 306

MEMORY 304

MODULE(S) 308

FIRST LENGTH MEASURING MODULE 202

TARGET DISTANCE MEASURING MODULE 204

SECOND AND THIRD LENGTH MEASURING MODULE 206

WEIGHT MEASURING MODULE 208

OTHER MODULE(S) 312

DATA 310

PROCESSED DATA 314

PRE-STORED DATA 316

**FIG. 3**

**Fig. 4a**

EP 3 754 374 B1

**Reception Signal**

402

Fish echo

t_echo

404

**Fig. 4b**

EP 3 754 374 B1

**Reception Signal**

Fish echo

δt

406

**Fig. 4c**

EP 3 754 374 B1

## Top view

Camera — 102

Transducer — 104

Optical axis

Swimming direction

Fish — 106

Apparent fish length < True fish length

**Fig. 5**

EP 3 754 374 B1

600   START

602

Measuring First Length of Target based on Reception Signal
of Transducer

604

Measuring Target Distance between Camera and the Target
based on Reception Signal of Transducer

606

Measuring Second Length and Third Length based on
Picture taken by the Camera

608

Measuring Weight of the Target based on the First Length,
the Second Length, and the Third Length

RETURN

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3316220 A

- US 20150234046 A

**Non-patent literature cited in the description**

- **HARVEY et al.** The accuracy and precision of underwater measurements of length and maximum body depth of southern bluefin tuna (Thunnus maccoyii) with a stereo-video camera system. *Fisheries Research,* 2003, vol. 63 (3), 315-326

- **GODLEWSKA M.** Target strength of freshwater fishes at 420 kHz measured in cages. *Hydroacoustics,* 2004, vol. 7, 55-62
- **PUIG et al.** Biomass estimation of bluefin tuna in sea cages by the combined use of acoustic and optical techniques. *Vol. Sci. Pap. ICCAT,* 01 January 2012, 284-290